# EUROPEAN PATENT APPLICATION

(11) **EP 4 328 088 A1**
(43) Date of publication of application: **28.02.2024**
(21) Application number: 23179885.1
(22) Date of filing: 16.06.2023
(51) Int. Cl.: B60Q 1/34, B60Q 1/38, B60Q 1/44, B60Q 1/46, B60Q 1/40, B60W 40/08

(54) **CONTROL DEVICE FOR VEHICLE, VEHICLE LAMP SYSTEM, AND RECORDING MEDIUM**

(30) Priority: 23.08.2022 JP 2022132669
(71) Applicant: TOYOTA JIDOSHA KABUSHIKI KAISHA, Toyota-shi, Aichi-ken, 471 8571 (JP)
(72) Inventor: NAGAE, Hajime, TOYOTA-SHI, AICHI-KEN, 471-8571 (JP)
(74) Representative: Cabinet Beau de Loménie

(57) **Abstract**

A control device (10) for a vehicle (SV) including a right lamp unit (60R) and a left lamp unit (60L) includes a flashing control unit (140) configured to control flashing of the right lamp unit (60R) and the left lamp unit (60L), and a behavior control unit (130) configured to execute at least a deceleration process for decelerating the vehicle (SV) in a traveling lane and a course change process for causing the vehicle (SV) to enter an adjacent lane or a road shoulder from the traveling lane when a driver of the vehicle (SV) is in a state that is inappropriate to continue driving. The flashing control unit (140) is configured to flash the right lamp unit (60R) and the left lamp unit (60L) in the same pattern when the behavior control unit (130) executes the deceleration process, and to flash the right lamp unit (60R) and the left lamp unit (60L) in different patterns when the behavior control unit (130) executes the course change process.

## Description

### BACKGROUND OF THE INVENTION

### 1. Field of the Invention

The present disclosure relates to a control device for a vehicle, a vehicle lamp system, and a recording medium.

### 2. Description of Related Art

Japanese Unexamined Patent Application Publication No. 2022-012246 (JP 2022-012246 A) discloses a device that, when an abnormality occurs in a driver of a traveling target vehicle, decelerates the target vehicle in a traveling lane while flashing a hazard indicator and moves the target vehicle to a road shoulder while flashing a turn signal, and when the target vehicle has moved to the road shoulder, decelerates and stops the target vehicle while flashing the hazard indicator again. Japanese Unexamined Patent Application Publication No. 05-201283 (JP 05-201283 A) discloses a device that separately includes a hazard indicator lamp unit and a turn signal lamp unit and the hazard indicator and the turn signal can flash simultaneously.

### SUMMARY OF THE INVENTION

In general vehicle lamp units, one lamp unit is used as both a hazard indicator and a turn signal. Therefore, in the device described in JP 2022-012246 A, the hazard indicator cannot flash while the turn signal is flashing when moving the target vehicle from the traveling lane to the road shoulder. That is, there is a problem of impossibility of informing the surroundings about the abnormality of the driver while the turn signal is flashing.

Although the device described in JP 05-201283 A can flash the hazard indicator and the turn signal simultaneously, there is a problem that the separate lamp units cause an increase in cost. It is necessary to secure a large space for mounting each lamp unit on a vehicle body, which may affect design or the like.

The present disclosure has been made to solve the above problems. That is, one object of the present disclosure is to provide a technology capable of effectively flashing a hazard indicator and a turn signal.

A control device for a vehicle according to the present disclosure is a control device for a vehicle including a right lamp unit and a left lamp unit each configured to flash in at least two different patterns. The control device includes: a flashing control unit configured to control flashing of the right lamp unit and the left lamp unit ; and a behavior control unit configured to execute at least a deceleration process for decelerating the vehicle in a traveling lane and a course change process for causing the vehicle to enter an adjacent lane or a road shoulder from the traveling lane when a driver of the vehicle is in a state that is inappropriate to continue driving. The flashing control unit is configured to: flash the right lamp unit and the left lamp unit in the same pattern when the behavior control unit executes the deceleration process; and flash the right lamp unit and the left lamp unit in different patterns when the behavior control unit executes the course change process.

A recording medium according to the present disclosure is a non-transitory recording medium storing instructions that are executable by one or more processors of a computer of a vehicle and that cause the one or more processors to perform functions. The vehicle includes a right lamp unit and a left lamp unit each configured to flash in at least two different patterns. The functions include: executing a deceleration process for decelerating the vehicle in a traveling lane when a driver of the vehicle is in a state that is inappropriate to continue driving; executing a course change process for changing a course of the vehicle to a road shoulder or an adjacent lane that is adjacent to the traveling lane; flashing the right lamp unit and the left lamp unit in the same pattern when the deceleration process is executed; and flashing the right lamp unit and the left lamp unit in different patterns when the course change process is executed.

According to the above configuration, the flashing control unit and the instructions in the recording medium flash the right lamp unit and the left lamp unit in different patterns when the driver is in the state that is inappropriate to continue the driving and the behavior control unit executes the course change process. Therefore, the hazard indicator and the turn signal can simultaneously be flashed while the target vehicle is changing the course. Thus, it is possible to effectively inform other surrounding vehicles and the like about the course change direction of the target vehicle while informing them that the driver of the target vehicle is in the abnormal condition.

A vehicle lamp system according to the present disclosure is a vehicle lamp system including: a right lamp unit and a left lamp unit each including at least one light emitting portion in the same unit; and a flashing control unit configured to control flashing of the light emitting portions of the right lamp unit and the left lamp unit based on an operation state of a turn signal lever and/or a hazard indicator switch. The flashing control unit is configured to: flash the light emitting portions of the right lamp unit and the left lamp unit in the same pattern when only the hazard indicator switch is operated; and flash the light emitting portions of the right lamp unit and the left lamp unit in different patterns when both the turn signal lever and the hazard indicator switch are operated.

A recording medium according to the present disclosure is a non-transitory recording medium storing instructions that are executable by one or more processors of a computer of a vehicle and that cause the one or more processors to perform functions. The vehicle includes a right lamp unit and a left lamp unit each including at least one light emitting portion in the same unit, and a turn signal lever and a hazard indicator switch to be operated to flash the right lamp unit or the left lamp unit. The functions include: flashing the light emitting portions of the right lamp unit and the left lamp unit in the same pattern when only the hazard indicator switch is operated; and flashing the light emitting portions of the right lamp unit and the left lamp unit in different patterns when both the turn signal lever and the hazard indicator switch are operated.

According to the above configuration, the flashing control unit and the instructions in the recording medium flash the light emitting portions of the right lamp unit and the light emitting portions of the left lamp unit in different patterns when the driver operates the turn signal lever while the hazard indicator switch is ON. Therefore, the hazard indicator and the turn signal can simultaneously be flashed even if the hazard indicator switch is ON when the turn signal lever is operated. Thus, it is possible to effectively inform other surrounding vehicles and the like about the course change direction of the target vehicle by the turn signal while providing information by the hazard indicator.

In the above description, the symbols used in the embodiment are bracketed for the component requirements of the invention corresponding to the embodiment to help understanding of the invention. However, each component requirement of the invention is not limited to the embodiment specified by the above symbols.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram showing a hardware configuration of a vehicle according to an embodiment;
FIG. 2 is a schematic configuration diagram of a right lamp unit and a left lamp unit according to the embodiment;
FIGS. 3A is schematic diagrams illustrating displayable flashing schemes of the right lamp unit and the left lamp unit according to the embodiment;
FIGS. 3B is schematic diagrams illustrating displayable flashing schemes of the right lamp unit and the left lamp unit according to the embodiment;
FIGS. 4A is schematic diagrams illustrating displayable flashing schemes of the right lamp unit and the left lamp unit according to the embodiment;
FIGS. 4B is schematic diagrams illustrating displayable flashing schemes of the right lamp unit and the left lamp unit according to the embodiment;
FIG. 5 is a schematic diagram illustrating a displayable flashing scheme of the right lamp unit and the left lamp unit according to the embodiment;
FIGS. 6A is schematic diagrams illustrating displayable flashing schemes of the right lamp unit and the left lamp unit according to the embodiment;
FIGS. 6B is schematic diagrams illustrating displayable flashing schemes of the right lamp unit and the left lamp unit according to the embodiment;
FIG. 7 is a schematic diagram showing a software configuration of a control device according to the embodiment;
FIG. 8 is a schematic diagram illustrating an operation of emergency withdrawal control;
FIG. 9 is a schematic diagram illustrating combinations of flashing patterns of light emitting portions of the right lamp unit and the left lamp unit;
FIG. 10 is a schematic diagram illustrating combinations of flashing patterns of the light emitting portions of the right lamp unit and the left lamp unit;
FIG. 11 is a schematic diagram illustrating combinations of flashing patterns of the light emitting portions of the right lamp unit and the left lamp unit;
FIG. 12 is a schematic diagram illustrating combinations of flashing patterns of the light emitting portions of the right lamp unit and the left lamp unit;
FIG. 13 is a schematic diagram illustrating combinations of flashing patterns of the light emitting portions of the right lamp unit and the left lamp unit;
FIG. 14 is a schematic diagram illustrating combinations of flashing patterns of the light emitting portions of the right lamp unit and the left lamp unit;
FIG. 15 is a schematic diagram illustrating combinations of flashing patterns of the light emitting portions of the right lamp unit and the left lamp unit;
FIG. 16 is a schematic diagram illustrating combinations of flashing patterns of the light emitting portions of the right lamp unit and the left lamp unit;
FIG. 17 is a flowchart illustrating a routine of emergency flashing control;
FIG. 18 is a schematic diagram illustrating flashing patterns in a modification; and
FIG. 19 is a schematic diagram illustrating flashing patterns in a modification.

### DETAILED DESCRIPTION OF EMBODIMENTS

Hereinafter, a control device for a vehicle, a vehicle lamp system, and a recording medium according to an embodiment will be described with reference to the drawings.

### Hardware Configuration

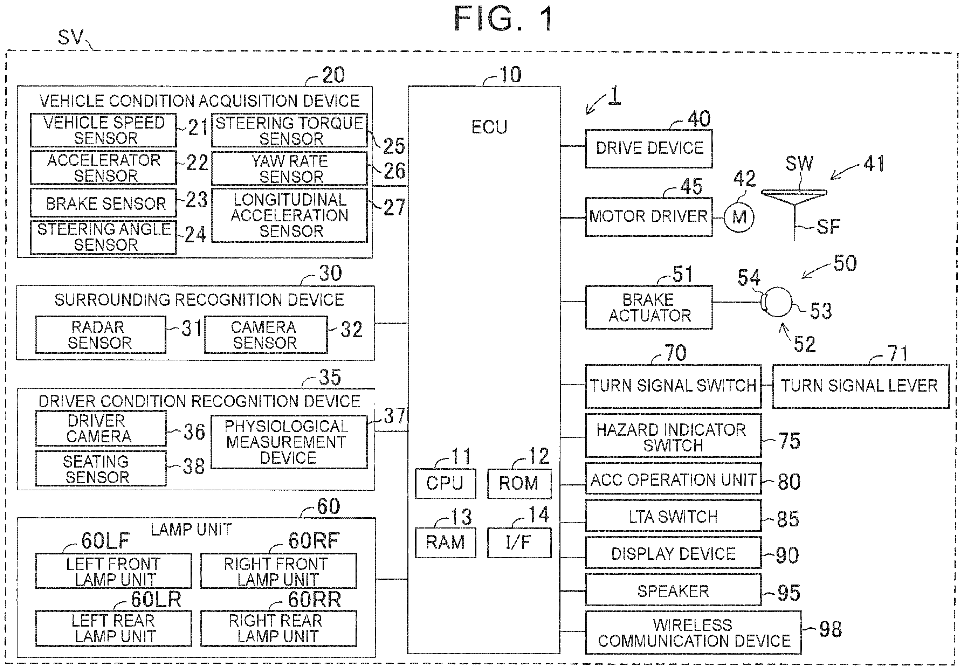

FIG. 1 is a schematic diagram showing a hardware configuration of a vehicle SV according to the present embodiment. The vehicle SV may also be referred to as "target vehicle" when it is necessary to distinguish the vehicle SV from other vehicles.

The vehicle SV includes an ECU 10. The ECU is an abbreviation for "electronic control unit". The ECU 10 includes a central processing unit (CPU) 11, a read-only memory (ROM) 12, a random access memory (RAM) 13, an interface device 14, and the like. The CPU 11 executes various programs stored in the ROM 12. The ROM 12 is a non-volatile memory and stores, for example, data required for the CPU 11 to execute various programs. The RAM 13 is a volatile memory and provides a work area where various programs are loaded when being executed by the CPU 11. The ROM 12 or the RAM 13 is an example of the recording medium. The interface device 14 is a communication device for communicating with external devices.

The ECU 10 is a central device that executes various types of control on the vehicle SV, such as driving assistance control. The driving assistance control is a concept that includes autonomous driving control. A vehicle condition acquisition device 20, a surrounding recognition device 30, a driver condition recognition device 35, a drive device 40, a steering device 41, a brake device 50, a lamp unit 60, a turn signal switch 70, a hazard indicator switch 75, an adaptive cruise control (ACC) operation unit 80, a lane trace assist (LTA) switch 85, a display device 90, a speaker 95, a wireless communication device 98, and the like are connected to the ECU 10 to communicate with the ECU 10.

The vehicle condition acquisition device 20 is a group of sensors that acquire conditions of the vehicle SV. Specifically, the vehicle condition acquisition device 20 includes a vehicle speed sensor 21, an accelerator sensor 22, a brake sensor 23, a steering angle sensor 24, a steering torque sensor 25, a yaw rate sensor 26, a longitudinal acceleration sensor 27, and the like. The vehicle condition acquisition device 20 transmits the conditions of the vehicle SV acquired by the sensors 21 to 27 to the ECU 10 at predetermined intervals.

The vehicle speed sensor 21 detects a traveling speed (vehicle speed) of the vehicle SV. The vehicle speed sensor 21 may be a wheel speed sensor. The accelerator sensor 22 detects an amount of operation on an accelerator pedal (not shown) by a driver. The brake sensor 23 detects an amount of operation on a brake pedal (not shown) by the driver. The steering angle sensor 24 detects a rotation angle of a steering wheel SW or a steering shaft SF described later, that is, a steering angle. The steering torque sensor 25 detects a rotational torque of the steering wheel SW or the steering shaft SF, that is, a steering torque. The yaw rate sensor 26 detects a yaw rate of the vehicle SV. The longitudinal acceleration sensor 27 detects a longitudinal acceleration G of the vehicle SV.

The surrounding recognition device 30 is a group of sensors that recognize object information about objects around the vehicle SV. Specifically, the surrounding recognition device 30 includes a radar sensor 31, a camera sensor 32, and the like. Examples of the object information include surrounding vehicles, traffic lights, lane marking lines on roads, traffic signs, and fallen objects. The object information around the vehicle SV acquired by the surrounding recognition device 30 is transmitted to the ECU 10.

The radar sensor 31 is provided, for example, at the front of the vehicle SV, and detects an object present in an area ahead of the vehicle SV. The radar sensor 31 includes a millimeter wave radar and/or a light detection and ranging (Lidar) sensor. The millimeter wave radar radiates radio waves in a millimeter wave band (millimeter waves) and receives the millimeter waves (reflected waves) reflected by objects present within a radiation range. The millimeter wave radar acquires, for example, a relative distance Dr between the vehicle SV and the object and a relative speed Vr between the vehicle SV and the object based on a phase difference between the transmitted millimeter wave and the received reflected wave, an attenuation level of the reflected wave, and a period from the transmission of the millimeter wave to the reception of the reflected wave. The Lidar sensor sequentially scans a pulsed laser beam having a wavelength shorter than the millimeter wave in a plurality of directions, and receives the beam reflected by an object to acquire, for example, the shape of the object detected ahead of the vehicle SV, a relative distance between the vehicle SV and the object, and a relative speed between the vehicle SV and the object.

The camera sensor 32 is, for example, a stereo camera or a monocular camera, and a digital camera including an imaging device such as a complementary metal oxide semiconductor (CMOS) or a charge-coupled device (CCD) can be used. The camera sensor 32 is disposed, for example, at an upper part of a front windshield of the vehicle SV. The camera sensor 32 acquires object information ahead of the vehicle SV by capturing an image of an area ahead of the vehicle SV and processing the captured image data. The object information indicates the type of an object detected ahead of the vehicle SV, a relative distance between the vehicle SV and the object, a relative speed between the vehicle SV and the object, and the like. The type of the object may be recognized by machine learning such as pattern matching.

The surrounding recognition device 30 repeatedly transmits the acquired object information to the ECU 10 every time a predetermined period elapses. The ECU 10 determines a relative relationship between the vehicle SV and the object by combining the relative relationship between the vehicle SV and the object that is obtained by the radar sensor 31 and the relative relationship between the vehicle SV and the object that is obtained by the camera sensor 32. The surrounding recognition device 30 need not include both the radar sensor 31 and the camera sensor 32, and may include, for example, only the radar sensor 31 or only the camera sensor 32.

The driver condition recognition device 35 recognizes conditions of the driver of the vehicle SV, and includes a driver camera 36, a physiological measurement device 37, a seating sensor 38, and the like. The driver camera 36 mainly captures an image of the driver's face, and detects, for example, a line-of-sight direction and an eye open state of the driver based on the captured face image. The physiological measurement device 37 measures, for example, a heart rate and a pulse rate of the driver, and detects the driver's physiological condition based on these measurement results. The seating sensor 38 is provided on a driver's seat, and detects seating conditions of the driver, such as whether the driver sits on the seat and the seating position of the driver when the driver is seated. The driver condition recognition device 35 transmits the conditions of the driver (hereinafter referred to as "driver condition information") acquired based on the detection results from the driver camera 36, the physiological measurement device 37, and the seating sensor 38 to the ECU 10 at predetermined intervals. The driver condition recognition device 35 need not include all the driver camera 36, the physiological measurement device 37, and the seating sensor 38, and may include at least one of them. The driver condition recognition device 35 may also include other sensors capable of detecting the conditions of the driver.

The drive device 40 generates a driving force to be transmitted to drive wheels of the vehicle SV. Examples of the drive device 40 include an engine and an electric motor. In the device of the present embodiment, the vehicle SV is any of a hybrid electric vehicle (HEV), a plug-in hybrid electric vehicle (PHEV), a fuel cell electric vehicle (FCEV), a battery electric vehicle (BEV), and an engine vehicle.

The steering device 41 includes the steering wheel SW, the steering shaft SF, a steering motor 42, and the like. The steering device 41 may be a rack-and-pinion device or a steering-by-wire device. The steering motor 42 is connected to the ECU 10 via a motor driver 45 and the drive is controlled in response to a command from the ECU 10. The steering motor 42 generates a steering torque with electric power supplied from the motor driver 45. With this steering torque, right and left steered wheels of the vehicle SV can be steered. That is, the steering motor 42 can change the steering angle of the vehicle SV (steered angle of the steered wheels).

The brake device 50 is, for example, a disc brake device that applies a braking force to the wheels of the vehicle SV. The brake device 50 includes a brake actuator 51, a brake mechanism 52 provided to each wheel, and the like. The brake actuator 51 is provided in a hydraulic circuit between the brake mechanism 52 and a master cylinder (not shown) that pressurizes a hydraulic fluid by a force of depressing the brake pedal. The brake mechanism 52 includes a brake disc 53 fixed to the wheel and a brake caliper 54 fixed to the vehicle body. The brake actuator 51 adjusts a hydraulic pressure to be supplied to a wheel cylinder built in the brake caliper 54 in response to an instruction from the ECU 10, and operates the wheel cylinder with the hydraulic pressure. Thus, the brake actuator 51 presses brake pads against the brake disc 53 to generate a frictional braking force. The brake device 50 is not limited to the disc brake device in the illustrated example, and may be a drum brake device or the like.

The lamp unit 60 serves both as a turn signal lamp and a hazard indicator lamp of the vehicle SV, and includes a left front lamp unit 60LF, a right front lamp unit 60RF, a left rear lamp unit 60LR, and a right rear lamp unit 60RR. The left front lamp unit 60LF is provided on a left side of the front of the vehicle SV. The right front lamp unit 60RF is provided on a right side of the front of the vehicle SV. The left rear lamp unit 60LR is provided on a left side of the rear of the vehicle SV. The right rear lamp unit 60RR is provided on a right side of the rear of the vehicle SV. The lamp unit 60 may further include lamp units provided on right and left side mirrors. Hereinafter, the left front lamp unit 60LF and the left rear lamp unit 60LR are also simply referred to as "left lamp unit 60L" unless otherwise distinguished. The right front lamp unit 60RF and the right rear lamp unit 60RR are also simply referred to as "right lamp unit 60R" unless otherwise distinguished. The right lamp unit 60R and the left lamp unit 60L may collectively be referred to simply as "lamp unit 60". Details of the lamp unit 60 will be described later.

The turn signal switch 70 detects a direction in which a turn signal lever 71 is operated by the driver. The turn signal lever 71 is provided, for example, on a steering column. When the driver operates the turn signal lever 71 counterclockwise, the turn signal switch 70 transmits, to the ECU 10, a leftward operation signal indicating that the turn signal lever 71 is being operated counterclockwise. When the driver operates the turn signal lever 71 clockwise, the turn signal switch 70 transmits, to the ECU 10, a rightward operation signal indicating that the turn signal lever 71 is being operated clockwise.

The hazard indicator switch 75 is an ON/OFF switch provided near the driver's seat (for example, on an instrument panel) and operated by the driver to flash the lamp unit 60 as a hazard indicator. When the hazard indicator switch 75 is turned ON by the driver, the hazard indicator switch 75 transmits, to the ECU 10, a hazard indicator ON signal indicating that the driver requests flashing of the hazard indicator.

The ACC operation unit 80 is provided near the driver's seat (for example, on the steering wheel or the steering column) and includes switches to be operated by the driver. The ACC operation unit 80 includes, for example, a start switch for choosing whether to start or terminate the ACC, a setting switch for setting a target vehicle speed and a target vehicle-to-vehicle distance (target vehicle-to-vehicle period) of the ACC, a cancellation switch for temporarily canceling the ACC during execution, and a resuming switch for resuming the ACC.

The LTA switch 85 is provided near the driver's seat (for example, on the steering wheel). The LTA switch 85 is an ON/OFF switch for the driver to choose whether to start or terminate the LTA.

The display device 90 is, for example, a multi-information display, a head-up display, or a display of a navigation system, and displays various images in response to commands from the ECU 10. The speaker 95 is, for example, a speaker of an audio system or a speaker of the navigation system, and outputs alert sound or the like in response to a command from the ECU 10.

The wireless communication device 98 is a wireless communication terminal for connecting to a help network system, and is connected to the ECU 10. The wireless communication device 98 operates when a helpnet connection command is received from the ECU 10, and communicates with a helpnet center to transmit, to the helpnet center, a help signal including current position information of the vehicle SV, an identification (ID) number for identifying the vehicle SV, and the like. The current position information of the vehicle SV may be acquired by, for example, a global positioning system (GPS) receiver provided in the navigation system (not shown).

### Lamp Unit

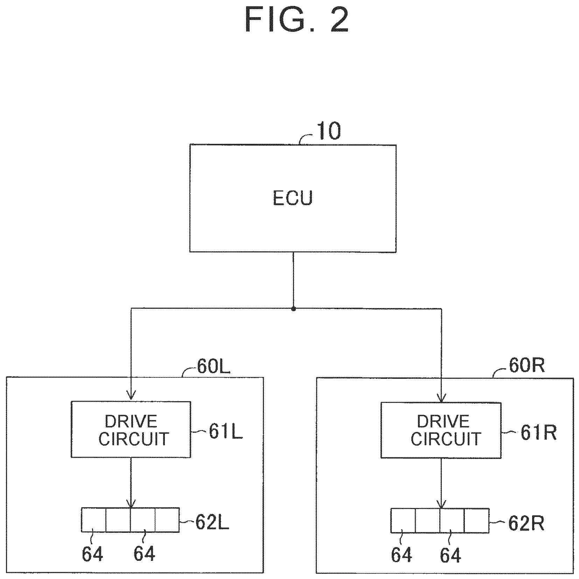

FIG. 2 is a schematic configuration diagram of the right lamp unit 60R and the left lamp unit 60L. The right lamp unit 60R and the left lamp unit 60L include drive circuits 61R and 61L and light emitting diode (LED) arrays 62R and 62L each including a plurality of light emitting elements. The drive circuits 61R and 61L supply electric power to the light emitting elements of the LED arrays 62R and 62L in response to commands from the ECU 10. The LED arrays 62R and 62L cause the respective light emitting elements to emit light with the electric power supplied from the drive circuits 61R and 61L.

The LED arrays 62R and 62L each include a plurality of light emitting portions 64 arranged in a vehicle width direction. The light emitting portions 64 of the LED array 62L are integrally provided in the left lamp unit 60L (for example, in a space defined by a lamp body and a lamp cover (not shown) of the left lamp unit 60L). The light emitting portions 64 of the LED array 62R are integrally provided in the right lamp unit 60R (for example, in a space defined by a lamp body and a lamp cover (not shown) of the right lamp unit 60R). Each light emitting portion 64 is associated with one or more light emitting elements of each of the LED arrays 62R and 62L, and can be turned ON or OFF individually in response to a command transmitted from the ECU 10 to each of the drive circuits 61R and 61L.

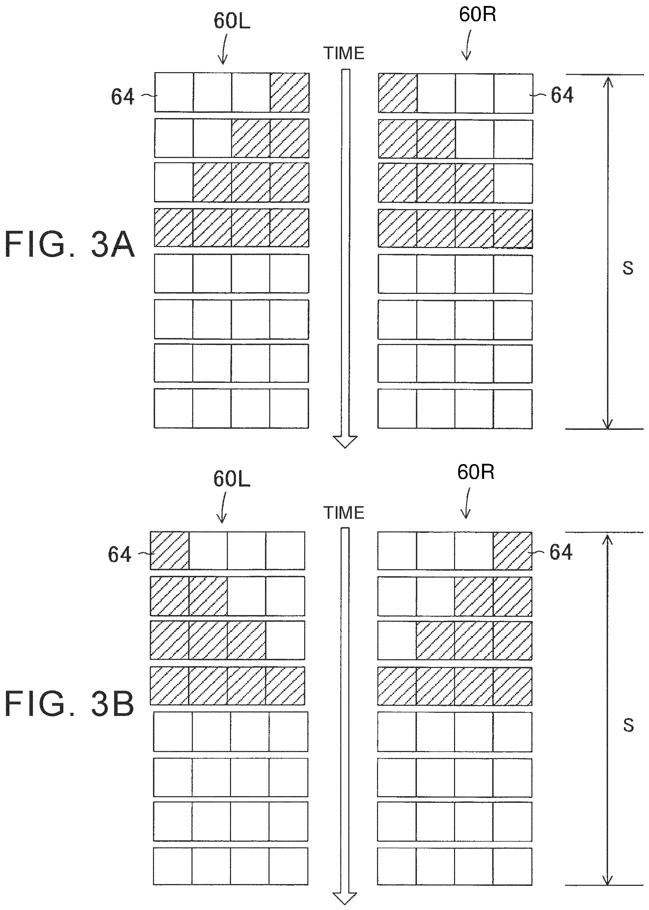

FIGS. 3A to 6B are schematic diagrams illustrating displayable flashing schemes of the right lamp unit 60R and the left lamp unit 60L according to the present embodiment. In the drawings, the hatched light emitting portion 64 indicates an ON state. In the drawings, time changes from top to bottom. A symbol S in the drawings indicates one flashing cycle.

FIG. 3A shows a flashing scheme in which the light emitting portions 64 of the lamp units 60R and 60L are sequentially turned ON from an inner side to an outer side in the vehicle width direction and then all the light emitting portions 64 are turned OFF simultaneously. The flashing scheme shown in FIG. 3A is hereinafter referred to as "first forward sequential indication". FIG. 3B shows a flashing scheme in which the light emitting portions 64 of the lamp units 60R and 60L are sequentially turned ON from the outer side to the inner side in the vehicle width direction and then all the light emitting portions 64 are turned OFF simultaneously. The flashing scheme shown in FIG. 3B is hereinafter referred to as "first reverse sequential indication".

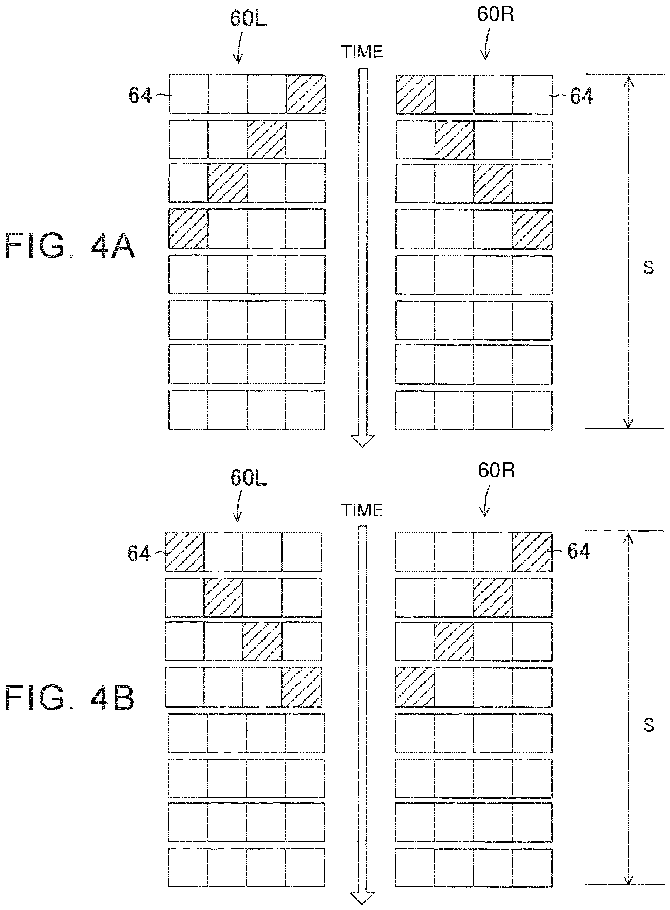

FIG. 4A shows a flashing scheme in which the light emitted from each light emitting portion 64 is sequentially shifted from the inner side to the outer side in the vehicle width direction by sequentially flashing the light emitting portions 64 of the lamp units 60R and 60L from the inner side in the vehicle width direction. The flashing scheme shown in FIG. 4A is hereinafter referred to as "second forward sequential indication". FIG. 4B shows a flashing scheme in which the light emitted from each light emitting portion 64 is sequentially shifted from the outer side to the inner side in the vehicle width direction by sequentially flashing the light emitting portions 64 of the lamp units 60R and 60L from the outer side in the vehicle width direction. The flashing scheme shown in FIG. 4B is hereinafter referred to as "second reverse sequential indication".

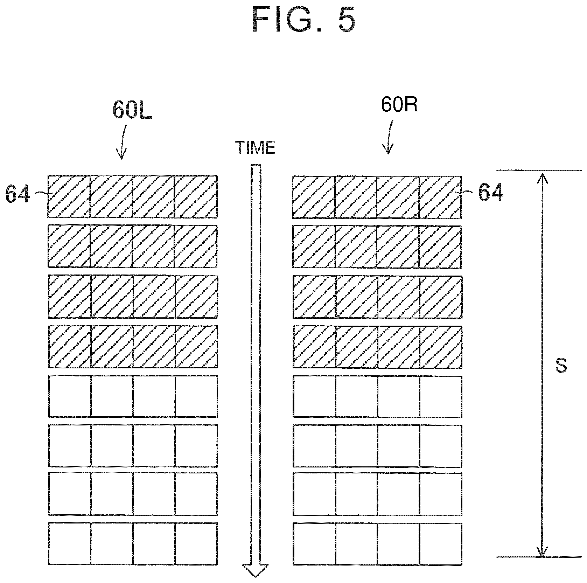

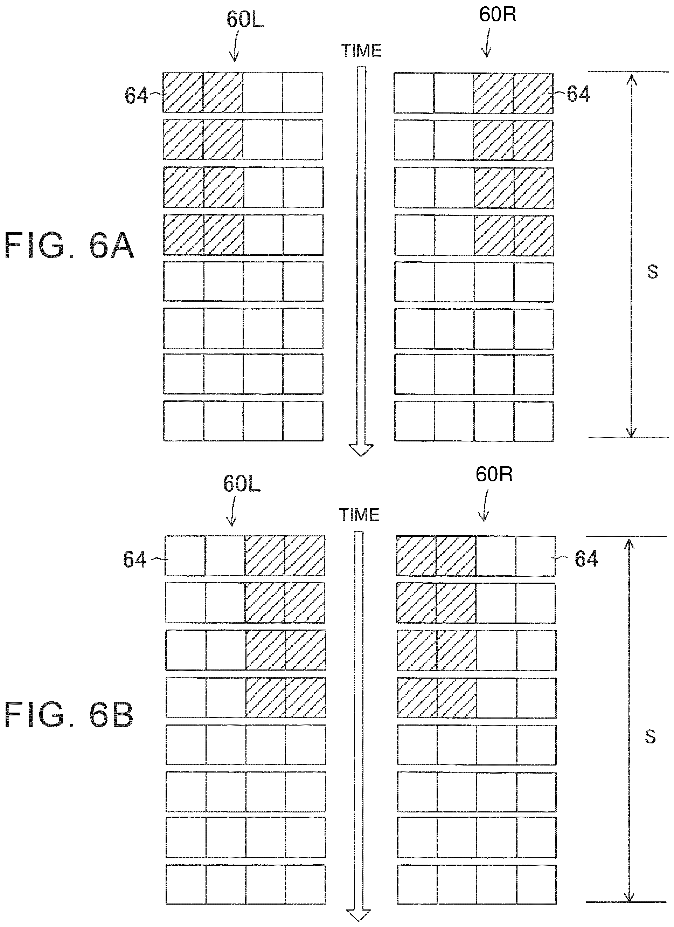

FIG. 5 shows a flashing scheme in which all the light emitting portions 64 of the lamp units 60R and 60L are turned ON and then all the light emitting portions 64 are turned OFF simultaneously. The flashing scheme shown in FIG. 5 is hereinafter referred to as "all-flashing indication". FIG. 6A shows a flashing scheme in which the light emitting portions 64 of the lamp units 60R and 60L are split into light emitting portions on the outer side in the vehicle width direction and light emitting portions on the inner side in the vehicle width direction and the light emitting portions on the outer side are turned ON and then turned OFF. The flashing scheme shown in FIG. 6A is hereinafter referred to as "outer split flashing indication". FIG. 6B shows a flashing scheme in which the light emitting portions 64 of the lamp units 60R and 60L are split into light emitting portions on the outer side in the vehicle width direction and light emitting portions on the inner side in the vehicle width direction and the light emitting portions on the inner side are turned ON and then turned OFF. The flashing scheme shown in FIG. 6B is hereinafter referred to as "inner split flashing indication".

The lamp units 60R and 60L are configured such that the hazard indicator and the turn signal can simultaneously be flashed by one lamp unit 60R or 60L by combining the flashing schemes shown in FIGS. 3A to 6B as appropriate depending on situations. In the present disclosure, "simultaneously flashing the hazard indicator and the turn signal" does not mean that the flashing timings of the hazard indicator and the turn signal are completely synchronized, but may mean that the hazard indicator and the turn signal are flashed at any timings within a predetermined period. Details of flashing control on the lamp units 60R and 60L will be described later.

### Software Configuration

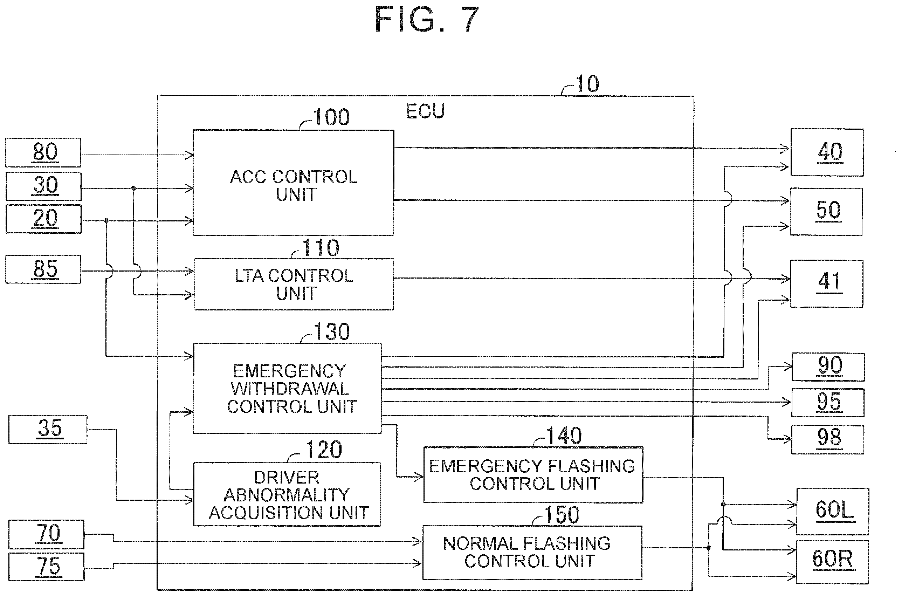

FIG. 7 is a schematic diagram showing a software configuration of the control device (ECU 10) according to the present embodiment.

As shown in FIG. 7, the ECU 10 includes an ACC control unit 100, an LTA control unit 110, a driver abnormality acquisition unit 120, an emergency withdrawal control unit 130, an emergency flashing control unit 140, a normal flashing control unit 150, and the like as functional elements. The functional elements 100 to 150 are implemented by the CPU 11 of the ECU 10 reading a program stored in the ROM 12 on the RAM 13 and executing the program. In the present embodiment, the functional elements 100 to 150 are described as being included in the ECU 10 that is integrated hardware, but may partially be provided in another ECU separate from the ECU 10. All or part of the functional elements 100 to 150 of the ECU 10 may be provided in an information processing device in a facility (such as a management center) capable of communicating with the vehicle SV.

The ACC control unit 100 executes the ACC based on a target vehicle speed and a target vehicle-to-vehicle distance (or a target vehicle-to-vehicle period). The ACC is known (see, for example, Japanese Unexamined Patent Application Publication No. 2014-148293 (JP 2014-148293 A), Japanese Unexamined Patent Application Publication No. 2006-315491 (JP 2006-315491 A), Japanese Patent No. 4172434 (JP 4172434 B), and Japanese Patent No. 4929777 (JP 4929777 B)). Therefore, description will briefly be given below. The ACC includes two types of control that are constant-speed traveling control and follow-up traveling control. The constant-speed traveling control is control for causing the vehicle SV to travel at a constant speed based on the target vehicle speed without requiring the driver to operate the accelerator and the brake. The follow-up traveling control is control for causing the target vehicle SV to follow a preceding vehicle while maintaining the vehicle-to-vehicle distance between the preceding vehicle and the target vehicle SV at the target vehicle-to-vehicle distance without requiring the driver to operate the accelerator and the brake. The preceding vehicle is a vehicle that is in an area ahead of the target vehicle SV and is traveling immediately ahead of the target vehicle SV.

When the start switch of the ACC operation unit 80 is turned ON, the ACC control unit 100 determines whether a preceding vehicle to be followed is present based on object information transmitted from the surrounding recognition device 30. When determination is made that no preceding vehicle is present, the ACC control unit 100 executes the constant-speed traveling control. In this case, the ACC control unit 100 controls the drive of the drive device 40 and, if necessary, controls the operation of the brake device 50 so that the vehicle speed agrees with the target vehicle speed. When determination is made that the preceding vehicle is present, the ACC control unit 100 executes the follow-up traveling control. In this case, the ACC control unit 100 controls the drive of the drive device 40 and, if necessary, controls the operation of the brake device 50 so that the vehicle-to-vehicle distance between the target vehicle SV and the preceding vehicle agrees with the target vehicle-to-vehicle distance.

The LTA control unit 110 executes the LTA for automatically changing the steering angle (steered angle of the steered wheels) to maintain the position of the target vehicle SV near a target traveling line in the traveling lane. The LTA is known (see, for example, Japanese Unexamined Patent Application Publication No. 2013-233930 (JP 2013-233930 A) and Japanese Unexamined Patent Application Publication No. 2018-103863 (JP 2018-103863 A)). Therefore, description will briefly be given below.

When the LTA switch 85 is turned ON, the LTA control unit 110 sets a target traveling line of the target vehicle SV based on one or both of lane marking lines recognized by the surrounding recognition device 30 or a traveling trajectory (hereinafter referred to as "preceding vehicle trajectory") of a vehicle to be followed by the ACC (that is, a preceding vehicle). The preceding vehicle trajectory may be acquired based on object information transmitted from the surrounding recognition device 30. The LTA control unit 110 changes the steering angle of the target vehicle SV by controlling the operation of the steering device 41 to maintain the lateral position of the target vehicle SV (that is, the position of the target vehicle SV in the vehicle width direction with respect to the road) near the target traveling line in the traveling lane.

The LTA control unit 110 changes the method for setting the target traveling line depending on the state of recognition of the lane marking lines and whether the vehicle to be followed is present. For example, when the right and left lane marking lines can be recognized in the distance, the LTA control unit 110 sets the target traveling line based on the center line of the traveling lane. In other words, the LTA control unit 110 sets the target traveling line based only on the lane marking lines. When the vehicle to be followed is present and the right and left lane marking lines cannot be recognized or only the vicinity of the right and left lane marking lines can be recognized, the LTA control unit 110 sets the target traveling line based only on the preceding vehicle trajectory or based on both the preceding vehicle trajectory and the center line of the traveling lane. When the vehicle to be followed is not present and the right and left lane marking lines cannot be recognized in the distance, the LTA control unit 110 cancels (terminates) the execution of the LTA.

The driver abnormality acquisition unit 120 acquires information indicating whether the driver is in an abnormal condition such as a seizure or doze that makes it difficult for the driver to continue to drive the vehicle SV based on driver condition information transmitted from the driver condition recognition device 35. When information indicating that the driver is in the abnormal condition is acquired, the driver abnormality acquisition unit 120 transmits, to the emergency withdrawal control unit 130, a "driver abnormality signal" indicating that the driver is in the abnormal condition.

The emergency withdrawal control unit 130 is an example of a behavior control unit of the present disclosure, and executes emergency withdrawal control for automatically moving the target vehicle SV to a withdrawal place such as a road shoulder and then stopping the target vehicle SV when the driver of the traveling target vehicle SV is in the abnormal condition that makes it difficult to continue to drive the target vehicle SV. A system that executes such emergency withdrawal control is also referred to as "emergency driving stop system (EDSS)".

Conditions for starting the emergency withdrawal control are not particularly limited, but examples thereof include the following conditions (1) to (3).
Start condition (1): When a system abnormality (for example, failure in some sensors) has occurred while the target vehicle SV is traveling by the ACC and/or the LTA, the driver is notified about an operation takeover request by the display device 90 or the speaker 95 but the driver does not perform the driving operation such as a braking or steering operation within a predetermined period.
Start condition (2): When the traveling condition of the target vehicle SV has exceeded a system limit so that the driving assistance control cannot be continued while the target vehicle SV is traveling by the ACC and/or the LTA, the driver is notified about an operation takeover request by the display device 90 or the speaker 95 but the driver does not perform the driving operation.
Start condition (3): A driver abnormality signal is received from the driver abnormality acquisition unit 120 while the target vehicle SV is traveling by the ACC and/or the LTA or while the target vehicle SV is traveling by a manual driving operation with the authority transferred to the driver.

When any one of the start conditions (1) to (3) is satisfied, the emergency withdrawal control unit 130 starts the emergency withdrawal control for moving the target vehicle SV from its traveling lane to a road shoulder and stopping the target vehicle SV by controlling the operations of the drive device 40, the steering device 41, and the brake device 50 based on object information such as lane marking lines and other surrounding vehicles recognized by the surrounding recognition device 30. When the help network system is available, the emergency withdrawal control unit 130 transmits a helpnet connection command to the wireless communication device 98, and executes a helpnet notification process for notifying the helpnet center that the driver of the target vehicle SV is in the abnormal condition.

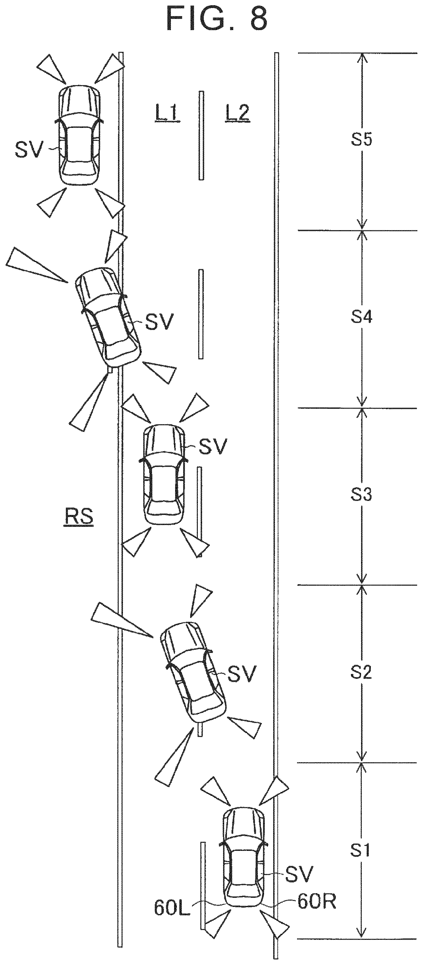

FIG. 8 is a schematic diagram illustrating an operation of the emergency withdrawal control in a case where an abnormality has occurred in the driver while the target vehicle SV is traveling in a second traveling lane L2 (for example, an overtaking lane) of a road having two lanes on one side. In the example shown in FIG. 8, the emergency withdrawal control unit 130 sequentially executes (1) a deceleration process S1 for decelerating the target vehicle SV in the second traveling lane L2 in which it is traveling, (2) a course change process S2 for changing the lane of the target vehicle SV to an adjacent first traveling lane L1 while the surrounding recognition device 30 is recognizing, for example, other vehicles traveling in the first traveling lane L1, (3) a deceleration process S3 for decelerating the target vehicle SV in the first traveling lane L1 in which it is traveling, (4) a course change process S4 for changing the course of the target vehicle SV to an adjacent road shoulder RS while the surrounding recognition device 30 is recognizing, for example, obstacles on the road shoulder RS, and (5) a deceleration and stop process S5 for decelerating and stopping the target vehicle SV in the road shoulder RS.

When the emergency withdrawal control is started while the target vehicle SV is traveling in the first traveling lane L1, the emergency withdrawal control unit 130 executes (3) the deceleration process S3, (4) the course change process S4, and (5) the deceleration and stop process S5. That is, the emergency withdrawal control basically includes at least one deceleration process, at least one course change process, and one deceleration and stop process. When a place such as a road shoulder where the target vehicle SV can safely be withdrawn cannot be detected, the emergency withdrawal control may include a process of decelerating and stopping the target vehicle SV in the traveling lane.

The emergency flashing control unit 140 executes emergency flashing control for flashing the turn signal and the hazard indicator as appropriate by controlling the operation of the lamp unit 60 during the execution of the emergency withdrawal control. While the target vehicle SV is decelerating in the traveling lane after the start of the emergency withdrawal control, it is desirable to inform the surroundings that the driver of the target vehicle SV is in the abnormal condition and the target vehicle SV is decelerating by flashing the lamp units 60R and 60L as the hazard indicator. While the target vehicle SV is changing the course by the emergency withdrawal control, it is desirable to inform the surroundings that the target vehicle SV is changing the course by flashing the lamp unit 60R or 60L as the turn signal. While the target vehicle SV is changing the course by the emergency withdrawal control, it is also desirable to inform the surroundings that the driver of the target vehicle SV is in the abnormal condition by flashing the lamp units 60R and 60L as the hazard indicator. That is, it is desirable to constantly flash the hazard indicator during the period from the start of the emergency withdrawal control to the stop of the target vehicle SV at the road shoulder, including the period in which the target vehicle SV is changing the course to the adjacent lane or the road shoulder. In particular, it is desirable to flash both the turn signal and the hazard indicator during the period in which the target vehicle SV is changing the course.

After the emergency withdrawal control unit 130 has started the emergency withdrawal control, the emergency flashing control unit 140 flashes the hazard indicator by flashing the light emitting portions 64 of the right lamp unit 60R and the left lamp unit 60L in the same pattern during execution of the deceleration process S1, the deceleration process S3, and the deceleration and stop process S5 shown in FIG. 8. The emergency flashing control unit 140 simultaneously flashes the turn signal and the hazard indicator by flashing the light emitting portions 64 of the right lamp unit 60R and the light emitting portions 64 of the left lamp unit 60L in different patterns while the emergency withdrawal control unit 130 is executing the course change process S2 and the course change process S4 shown in FIG. 8.

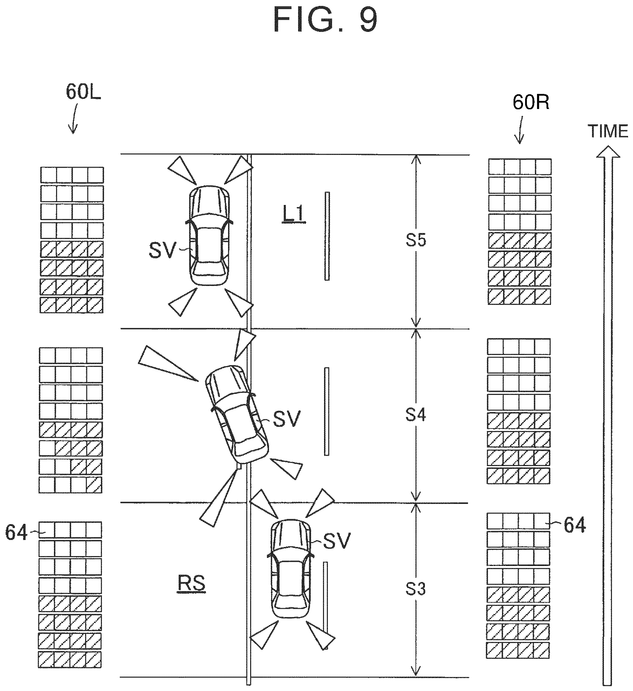

Combinations of flashing patterns of the light emitting portions 64 of the right lamp unit 60R and the left lamp unit 60L will be described below with reference to FIGS. 9 to 16. In FIGS. 9 to 16, an example in which the emergency withdrawal control is started while the target vehicle SV is traveling in the first traveling lane L1 will be described for the sake of convenience. When the emergency withdrawal control is started in the second traveling lane L2 or in a traveling lane closer to a median strip than the second traveling lane L2, the processes are the same except that the numbers of the course change processes and the deceleration processes increase. Therefore, description will be omitted. In FIGS. 9 to 16, time changes from bottom to top. For the sake of simplification, each pattern is shown only for one flashing cycle.

In the example shown in FIG. 9, the emergency flashing control unit 140 flashes the hazard indicator by flashing the right lamp unit 60R and the left lamp unit 60L by the same "all-flashing indication" in the deceleration process S3 and the deceleration and stop process S5. In the course change process S4, the emergency flashing control unit 140 simultaneously flashes the hazard indicator and the turn signal by flashing the left lamp unit 60L by the "first forward sequential indication" and the right lamp unit 60R by the "all-flashing indication". By flashing the left lamp unit 60L by the "first forward sequential indication" from right to left in the course change process S4, it is possible to appropriately inform other surrounding vehicles and the like about the course change direction of the target vehicle SV. By flashing both the right lamp unit 60R and the left lamp unit 60L, it is possible to effectively inform other surrounding vehicles and the like that the driver of the target vehicle SV is in the abnormal condition.

In the deceleration process S3 and the deceleration and stop process S5, the right lamp unit 60R and the left lamp unit 60L may be flashed by any of the "first forward sequential indication", the "first reverse sequential indication", the "second forward sequential indication", the "second reverse sequential indication", the "outer split flashing indication", and the "inner split flashing indication" as long as the patterns are the same.

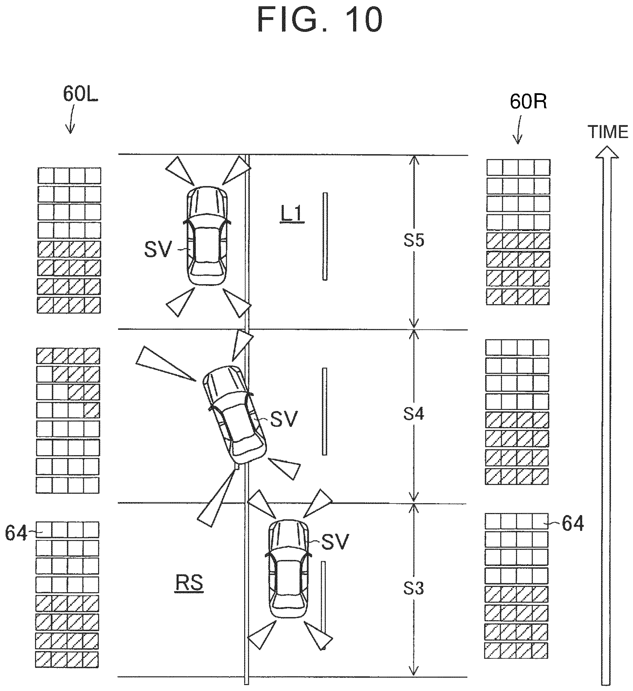

In the example shown in FIG. 10, the phases of the flashing cycles of the right lamp unit 60R and the left lamp unit 60L are shifted by 180° in the course change process S4 of FIG. 9. Also in this case, it is possible to flash both the hazard indicator and the turn signal in the course change process S4. Also in the example shown in FIG. 10, the right lamp unit 60R and the left lamp unit 60L may be flashed in the deceleration process S3 and the deceleration and stop process S5 by any of the "first forward sequential indication", the "first reverse sequential indication", the "second forward sequential indication", the "second reverse sequential indication", the "outer split flashing indication", and the "inner split flashing indication" as long as the flashing patterns are the same.

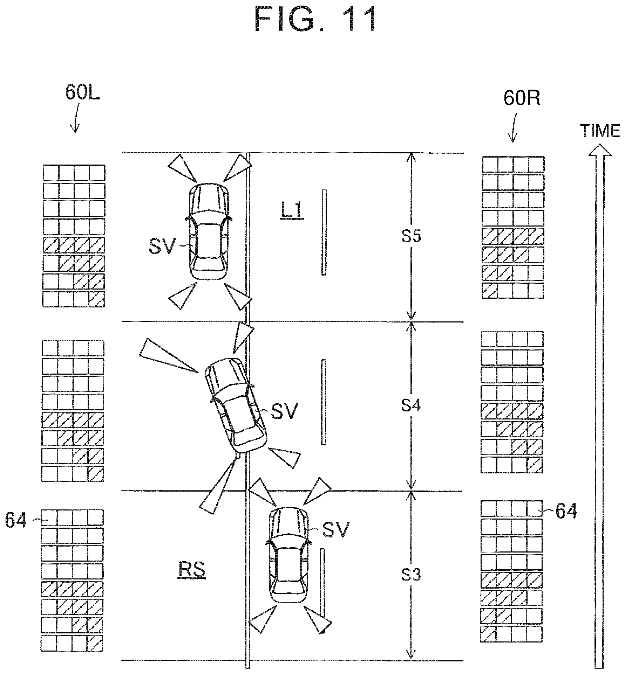

In the example shown in FIG. 11, the emergency flashing control unit 140 flashes the hazard indicator by flashing the right lamp unit 60R and the left lamp unit 60L by the same "first forward sequential indication" in the deceleration process S3 and the deceleration and stop process S5. In the course change process S4, the emergency flashing control unit 140 simultaneously flashes the hazard indicator and the turn signal by flashing the left lamp unit 60L by the "first forward sequential indication" and the right lamp unit 60R by the "first reverse sequential indication". By flashing the left lamp unit 60L by the "first forward sequential indication" from right to left and the right lamp unit 60R by the "first reverse sequential indication" from right to left in the course change process S4, it is possible to appropriately inform other surrounding vehicles and the like about the course change direction of the target vehicle SV. By flashing both the right lamp unit 60R and the left lamp unit 60L, it is possible to effectively inform other surrounding vehicles and the like that the driver of the target vehicle SV is in the abnormal condition.

In the deceleration process S3 and the deceleration and stop process S5, the right lamp unit 60R and the left lamp unit 60L may be flashed by any of the "first reverse sequential indication", the "second forward sequential indication", the "second reverse sequential indication", the "all-flashing indication", the "outer split flashing indication", and the "inner split flashing indication" as long as the patterns are the same.

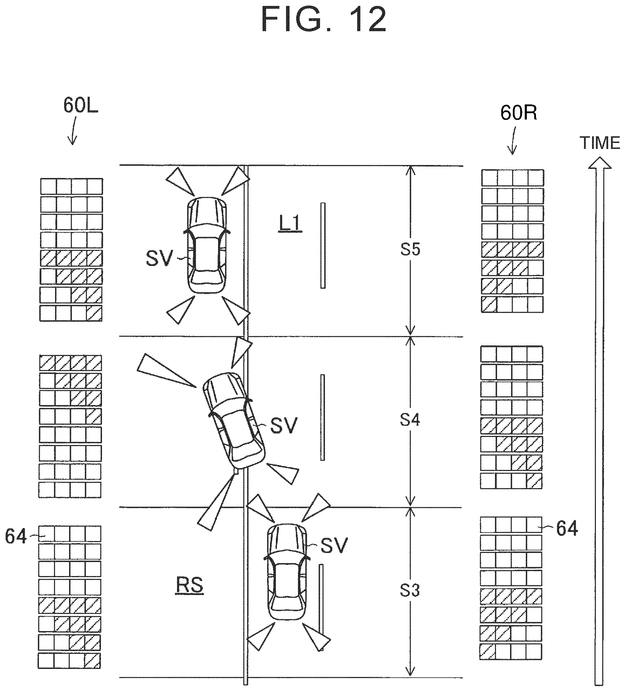

In the example shown in FIG. 12, the phases of the flashing cycles of the right lamp unit 60R and the left lamp unit 60L are shifted by 180° in the course change process S4 of FIG. 11. Also in this case, it is possible to flash both the hazard indicator and the turn signal in the course change process S4. Also in the example shown in FIG. 12, the right lamp unit 60R and the left lamp unit 60L may be flashed in the deceleration process S3 and the deceleration and stop process S5 by any of the "first reverse sequential indication", the "second forward sequential indication", the "second reverse sequential indication", the "all-flashing indication", the "outer split flashing indication", and the "inner split flashing indication" as long as the flashing patterns are the same.

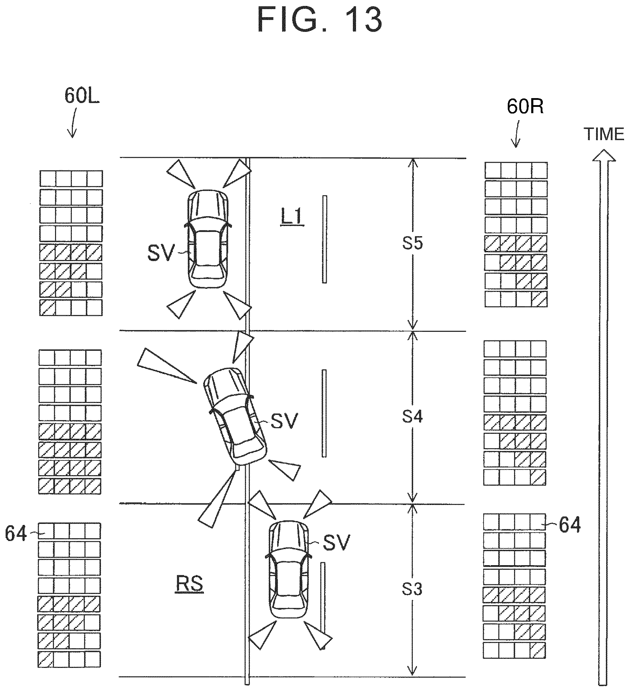

In the example shown in FIG. 13, the emergency flashing control unit 140 flashes the hazard indicator by flashing the right lamp unit 60R and the left lamp unit 60L by the same "first reverse sequential indication" in the deceleration process S3 and the deceleration and stop process S5. In the course change process S4, the emergency flashing control unit 140 simultaneously flashes the hazard indicator and the turn signal by flashing the left lamp unit 60L by the "all-flashing indication" and the right lamp unit 60R by the "first reverse sequential indication". By flashing the right lamp unit 60R by the "first reverse sequential indication" from right to left in the course change process S4, it is possible to appropriately inform other surrounding vehicles and the like about the course change direction of the target vehicle SV. By flashing both the right lamp unit 60R and the left lamp unit 60L, it is possible to effectively inform other surrounding vehicles and the like that the driver of the target vehicle SV is in the abnormal condition.

In the deceleration process S3 and the deceleration and stop process S5, the right lamp unit 60R and the left lamp unit 60L may be flashed by any of the "first forward sequential indication", the "second forward sequential indication", the "second reverse sequential indication", the "all-flashing indication", the "outer split flashing indication", and the "inner split flashing indication" as long as the patterns are the same.

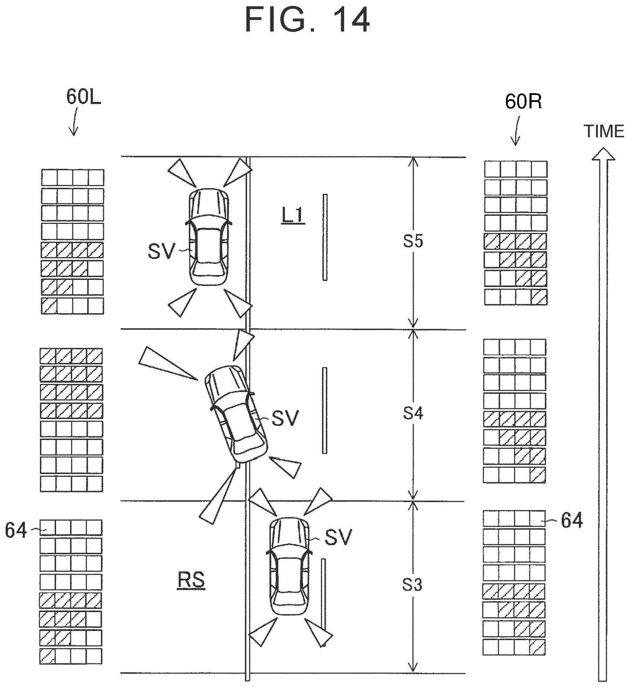

In the example shown in FIG. 14, the phases of the flashing cycles of the right lamp unit 60R and the left lamp unit 60L are shifted by 180° in the course change process S4 of FIG. 13. Also in this case, it is possible to flash both the hazard indicator and the turn signal in the course change process S4. Also in the example shown in FIG. 14, the right lamp unit 60R and the left lamp unit 60L may be flashed in the deceleration process S3 and the deceleration and stop process S5 by any of the "first forward sequential indication", the "second forward sequential indication", the "second reverse sequential indication", the "all-flashing indication", the "outer split flashing indication", and the "inner split flashing indication" as long as the flashing patterns are the same.

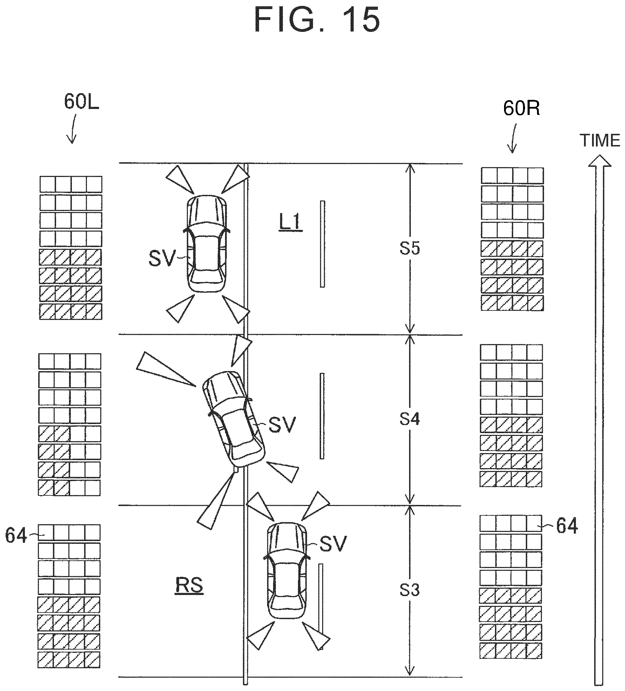

In the example shown in FIG. 15, the emergency flashing control unit 140 flashes the hazard indicator by flashing the right lamp unit 60R and the left lamp unit 60L by the same "all-flashing indication" in the deceleration process S3 and the deceleration and stop process S5. In the course change process S4, the emergency flashing control unit 140 simultaneously flashes the hazard indicator and the turn signal by flashing the left lamp unit 60L by the "outer split flashing indication" and the right lamp unit 60R by the "all-flashing indication". By flashing the left lamp unit 60L by the "outer split flashing indication" on the left half alone in the course change process S4, it is possible to appropriately inform other surrounding vehicles and the like about the course change direction of the target vehicle SV. By flashing both the right lamp unit 60R and the left lamp unit 60L, it is possible to effectively inform other surrounding vehicles and the like that the driver of the target vehicle SV is in the abnormal condition.

In the deceleration process S3 and the deceleration and stop process S5, the right lamp unit 60R and the left lamp unit 60L may be flashed by any of the "first forward sequential indication", the "first reverse sequential indication", the "second forward sequential indication", the "second reverse sequential indication", the "outer split flashing indication", and the "inner split flashing indication" as long as the patterns are the same.

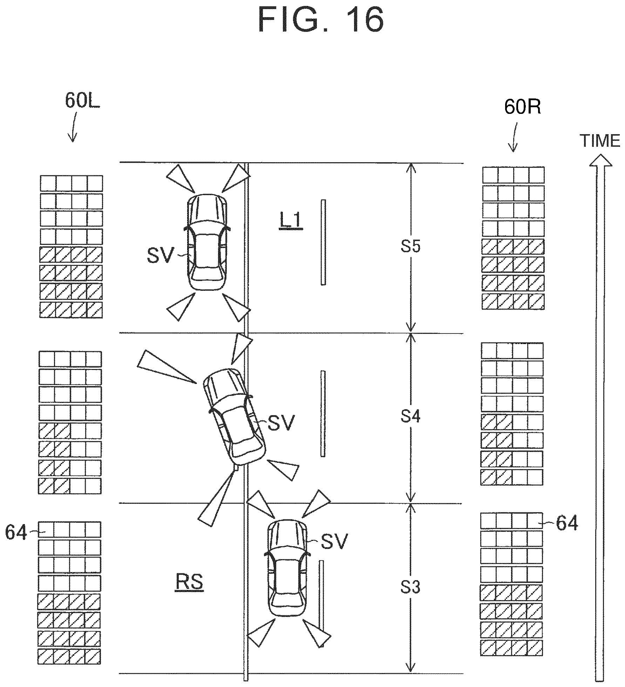

In the example shown in FIG. 16, the emergency flashing control unit 140 flashes the hazard indicator by flashing the right lamp unit 60R and the left lamp unit 60L by the same "all-flashing indication" in the deceleration process S3 and the deceleration and stop process S5. In the course change process S4, the emergency flashing control unit 140 simultaneously flashes the hazard indicator and the turn signal by flashing the left lamp unit 60L by the "outer split flashing indication" and the right lamp unit 60R by the "inner split flashing indication". By flashing the left lamp unit 60L by the "outer split flashing indication" on the left half alone and the right lamp unit 60R by the "inner split flashing indication" on the left half alone in the course change process S4, it is possible to appropriately inform other surrounding vehicles and the like about the course change direction of the target vehicle SV. By flashing both the right lamp unit 60R and the left lamp unit 60L, it is possible to effectively inform other surrounding vehicles and the like that the driver of the target vehicle SV is in the abnormal condition.

In the deceleration process S3 and the deceleration and stop process S5, the right lamp unit 60R and the left lamp unit 60L may be flashed by any of the "first forward sequential indication", the "first reverse sequential indication", the "second forward sequential indication", the "second reverse sequential indication", the "outer split flashing indication", and the "inner split flashing indication" as long as the patterns are the same.

### Normal Flashing Control

Referring to FIG. 7 again, when the emergency withdrawal control is not being executed, that is, when the driver of the target vehicle SV can perform a normal driving operation, the normal flashing control unit 150 executes normal flashing control for controlling the operation of the lamp unit 60 in response to an operation on the turn signal lever 71 or the hazard indicator switch 75 by the driver.

When a leftward operation signal is received from the turn signal switch 70, that is, when the driver operates the turn signal lever 71 counterclockwise, the normal flashing control unit 150 flashes the turn signal for the leftward direction by flashing the light emitting portions 64 of the left lamp unit 60L while maintaining the light emitting portions 64 of the right lamp unit 60R in the OFF state. When a rightward operation signal is received from the turn signal switch 70, that is, when the driver operates the turn signal lever 71 clockwise, the normal flashing control unit 150 flashes the turn signal for the rightward direction by flashing the light emitting portions 64 of the right lamp unit 60R while maintaining the light emitting portions 64 of the left lamp unit 60L in the OFF state. The flashing pattern of the turn signal may be any of the "first forward sequential indication", the "first reverse sequential indication", the "second forward sequential indication", the "second reverse sequential indication", the "all-flashing indication", the "outer split flashing indication", and the "inner split flashing indication".

When a hazard indicator ON signal is received from the hazard indicator switch 75, that is, when the driver turns ON the hazard indicator switch 75, the normal flashing control unit 150 flashes the hazard indicator by flashing the light emitting portions 64 of the right lamp unit 60R and the light emitting portions 64 of the left lamp unit 60L at the same cycle and phase. The flashing pattern of the hazard indicator may be any of the "first forward sequential indication", the "first reverse sequential indication", the "second forward sequential indication", the "second reverse sequential indication", the "all-flashing indication", the "outer split flashing indication", and the "inner split flashing indication".

In general vehicle lamp units, when the hazard indicator switch is ON and the driver operates the turn signal lever counterclockwise or clockwise, the turn signal does not flash. Therefore, there is a problem that the driver cannot inform the surroundings about his/her intention to change the course in the following cases.

Case 1: When the driver of the target vehicle is given the right of way by a succeeding vehicle in an adjacent lane to which the target vehicle is expected to change the course, the target vehicle changes the course while making so-called "thank-you hazard indicator flashing" to show gratitude to the succeeding vehicle.
Case 2: When the target vehicle is at the tail end of a traffic jam, the target vehicle SV changes the course to an adjacent lane while the driver informs a succeeding vehicle about the occurrence of the traffic jam by the hazard indicator.
Case 3: In a state in which the target vehicle is stopped at a road shoulder or the like with the hazard indicator flashing, the driver starts the target vehicle SV without turning OFF the hazard indicator switch.

In any of the cases 1 to 3, the turn signal does not flash when the driver operates the turn signal lever without turning OFF the hazard indicator switch. Therefore, the driver of the succeeding vehicle cannot foresee the course change of the target vehicle, and the succeeding vehicle may collide with the target vehicle. In the case 2, the driver of the succeeding vehicle can be informed about the lane change intention when the driver of the target vehicle turns OFF the hazard indicator switch and operates the turn signal lever. When the hazard indicator switch is turned OFF, however, the driver of the succeeding vehicle cannot be informed about the occurrence of the traffic jam ahead. Therefore, the succeeding vehicle may collide with another vehicle at the tail end of the traffic jam after the target vehicle has changed the lane.

When the driver operates the turn signal lever 71 while the hazard indicator switch 75 is ON, the normal flashing control unit 150 flashes the hazard indicator and the turn signal by flashing the light emitting portions 64 of the right lamp unit 60R and the light emitting portions 64 of the left lamp unit 60L in different patterns.

Specifically, when a leftward operation signal is received from the turn signal switch 70 while a hazard indicator ON signal is received from the hazard indicator switch 75, the normal flashing control unit 150 flashes the right lamp unit 60R and the left lamp unit 60L in any one of the patterns in the course change process S4 during the emergency withdrawal control shown in FIGS. 9 to 16. When a rightward operation signal is received from the turn signal switch 70 while the hazard indicator ON signal is received from the hazard indicator switch 75, the normal flashing control unit 150 flashes the right lamp unit 60R and the left lamp unit 60L in a pattern obtained by switching right and left in any one of the patterns in the course change process S4 during the emergency withdrawal control shown in FIGS. 9 to 16.

Therefore, when the turn signal lever 71 is operated while the hazard indicator is ON by turning ON the hazard indicator switch 75, the turn signal is flashed while continuing to flash the hazard indicator. Thus, in the case 1, it is possible to effectively inform the succeeding vehicle about the course change direction of the target vehicle SV while making the thank-you hazard indicator flashing. In the case 2, it is possible to effectively inform the succeeding vehicle about the occurrence of the traffic jam ahead while informing the succeeding vehicle about the course change direction of the target vehicle SV. In the case 3, it is possible to effectively inform the succeeding vehicle that the target vehicle SV has returned to the lane when the driver operates the turn signal lever 71 even if the driver has started the target vehicle SV while forgetting to turn OFF the hazard indicator switch 75.

### Processing Flow of Emergency Flashing Control

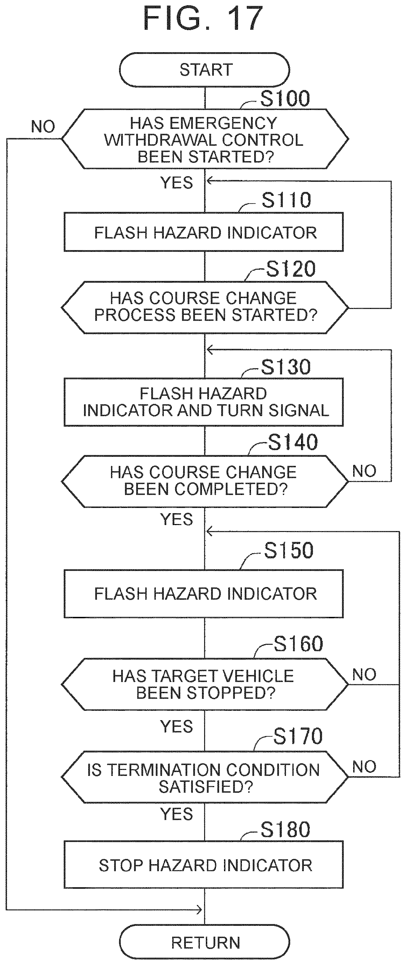

FIG. 17 is a flowchart illustrating a routine of the emergency flashing control. In the flow shown in FIG. 17, description will be given of an exemplary case where the emergency withdrawal control is started while the target vehicle SV is traveling in the first traveling lane L1.

In step S100, the emergency flashing control unit 140 determines whether the emergency withdrawal control unit 130 has started the emergency withdrawal control, that is, whether the emergency withdrawal control unit 130 has started the deceleration process for decelerating the target vehicle SV in the first traveling lane L1. When the emergency withdrawal control unit 130 has started the emergency withdrawal control (Yes), the emergency flashing control unit 140 proceeds to a process of step 110. When the emergency withdrawal control unit 130 has not started the emergency withdrawal control (No), the emergency flashing control unit 140 returns this routine.

In step S 110, the emergency flashing control unit 140 flashes the hazard indicator by flashing the right lamp unit 60R and the left lamp unit 60L in the same pattern. In step S120, the emergency flashing control unit 140 determines whether the emergency withdrawal control unit 130 has started the course change process for causing the target vehicle SV to enter the road shoulder RS from the first traveling lane L1. When the emergency withdrawal control unit 130 has started the course change process (Yes), the emergency flashing control unit 140 proceeds to a process of step 130. When the emergency withdrawal control unit 130 has not started the course change process (No), the emergency flashing control unit 140 returns to step S110 to continue to flash the hazard indicator. That is, the hazard indicator continues to flash while the emergency withdrawal control unit 130 is executing the deceleration process for decelerating the target vehicle SV in the first traveling lane L1.

In step S130, the emergency flashing control unit 140 flashes the hazard indicator and the turn signal by flashing the right lamp unit 60R and the left lamp unit 60L in different patterns. In step S140, the emergency flashing control unit 140 determines whether the course change of the target vehicle SV to the road shoulder RS by the emergency withdrawal control has been completed. When the course change of the target vehicle SV to the road shoulder RS has been completed (Yes), the emergency flashing control unit 140 proceeds to a process of step 150. When the course change of the target vehicle SV to the road shoulder RS has not been completed (No), the emergency flashing control unit 140 returns to step S130 to continue to flash the hazard indicator and the turn signal. That is, the hazard indicator and the turn signal continue to flash until the emergency withdrawal control unit 130 completes the course change process.

In step S150, the emergency flashing control unit 140 flashes the hazard indicator by flashing the right lamp unit 60R and the left lamp unit 60L in the same pattern. In step S160, the emergency flashing control unit 140 determines whether the target vehicle SV has been stopped at the road shoulder RS by the deceleration and stop process executed by the emergency withdrawal control unit 130. When the target vehicle SV has been stopped at the road shoulder RS (Yes), the emergency flashing control unit 140 proceeds to a process of step 170. When the target vehicle SV has not been stopped at the road shoulder RS (No), the emergency flashing control unit 140 returns to step S150 to continue to flash the hazard indicator.

In step S170, the emergency flashing control unit 140 determines whether a predetermined termination condition is satisfied. Examples of the termination condition include a condition that the hazard indicator switch 75 is successively turned ON multiple times (for example, twice). When the termination condition is not satisfied (No), the emergency flashing control unit 140 returns to step S150 to continue to flash the hazard indicator. When the termination condition is satisfied (Yes), the emergency flashing control unit 140 proceeds to a process of step S180 to stop flashing the hazard indicator, and then returns this routine.

According to the present embodiment described in detail above, when the emergency withdrawal control unit 130 executes the course change process for causing the target vehicle SV to enter the adjacent lane L1 or the road shoulder RS from its traveling lane L2, the emergency flashing control unit 140 flashes both the hazard indicator and the turn signal by flashing the right lamp unit 60R and the left lamp unit 60L in different patterns. Thus, it is possible to effectively inform other surrounding vehicles and the like about the course change direction of the target vehicle SV while informing them that the driver of the target vehicle SV is in the abnormal condition.

When the driver operates the turn signal lever 71 while the hazard indicator switch 75 is ON, the normal flashing control unit 150 flashes both the hazard indicator and the turn signal by flashing the right lamp unit 60R and the left lamp unit 60L in different patterns. Thus, it is possible to effectively inform the succeeding vehicle about the course change direction of the target vehicle SV while informing the succeeding vehicle about the thank-you hazard indicator flashing or the occurrence of the traffic jam ahead.

Although the control device for the vehicle, the vehicle lamp system, and the recording medium according to the present embodiment have been described above, the present disclosure is not limited to the above embodiment, and various modifications are possible without departing from the object of the present disclosure.

### First Modification

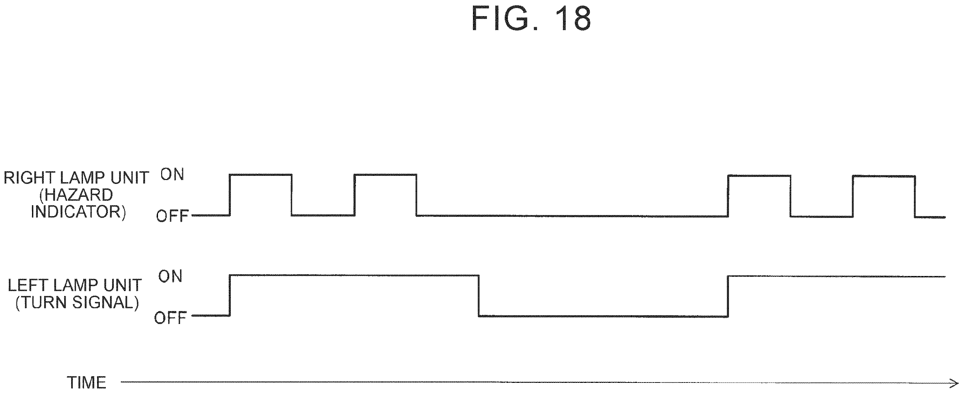

For example, in the above embodiment, description has been given of the example in which the flashing cycles when flashing both the hazard indicator and the turn signal are the same cycle or cycles with their phases shifted by 180°. As shown in FIG. 18, the right lamp unit 60R and the left lamp unit 60L may be flashed at different flashing cycles.

In FIG. 18, the upper part shows the flashing cycle (ON/OFF) of the right lamp unit 60R serving as the hazard indicator, and the lower part shows the flashing cycle (ON/OFF) of the left lamp unit 60L serving as the turn signal. The upper and lower parts of FIG. 18 can be interchanged. That is, the right lamp unit 60R may serve as the turn signal at the lower part, and the left lamp unit 60L may serve as the hazard indicator at the upper part.

In the example shown in FIG. 18, the flashing cycle of the left lamp unit 60L serving as the turn signal at the lower part is set longer than the flashing cycle of the right lamp unit 60R serving as the hazard indicator at the upper part. Therefore, the right lamp unit 60R and the left lamp unit 60L flash in different patterns. By setting the flashing cycles to different lengths in this way, the hazard indicator and the turn signal can simultaneously be flashed even in a configuration in which each of the lamp units 60R and 60L includes one light emitting portion 64 alone or in a configuration in which each of the lamp units 60R and 60L includes a plurality of light emitting portions 64 but the light emitting portions 64 cannot be flashed sequentially or partially. That is, it is possible to attain the same actions and effects as those of the above embodiment.

### Second Modification

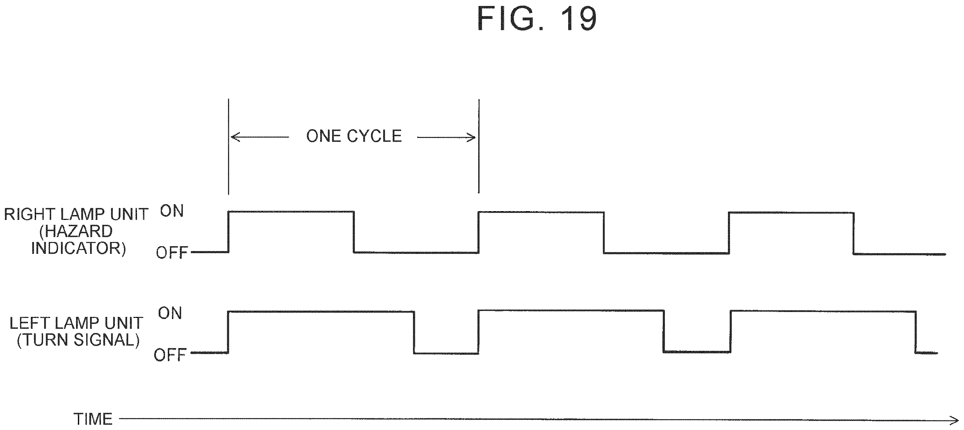

As shown in FIG. 19, the lighting periods (ON periods) of the right lamp unit 60R and the left lamp unit 60L per cycle may be set to different lengths to flash the right lamp unit 60R and the left lamp unit 60L in different patterns.

In FIG. 19, the upper part shows the flashing cycle (ON/OFF) of the right lamp unit 60R serving as the hazard indicator, and the lower part shows the flashing cycle (ON/OFF) of the left lamp unit 60L serving as the turn signal. The upper and lower parts of FIG. 19 can be interchanged. That is, the right lamp unit 60R may serve as the turn signal at the lower part, and the left lamp unit 60L may serve as the hazard indicator at the upper part.

In the example shown in FIG. 19, the duty ratio between a lit state (ON) and an unlit state (OFF) per cycle is set to, for example, 50:50 for the right lamp unit 60R serving as the hazard indicator at the upper part. The duty ratio between the lit state (ON) and the unlit state (OFF) per cycle is set to, for example, 70:30 for the left lamp unit 60L serving as the turn signal at the lower part. That is, the lighting period of the turn signal per cycle is set longer than the lighting period of the hazard indicator per cycle. Therefore, the right lamp unit 60R and the left lamp unit 60L flash in different patterns. By setting the lighting periods per cycle to different lengths in this way, the hazard indicator and the turn signal can simultaneously be flashed even in a configuration in which each of the lamp units 60R and 60L includes one light emitting portion 64 alone or in a configuration in which each of the lamp units 60R and 60L includes a plurality of light emitting portions 64 but the light emitting portions 64 cannot be flashed sequentially or partially. That is, it is possible to attain the same actions and effects as those of the above embodiment.

## Claims

1. A control device (10) for a vehicle (SV) including a right lamp unit (60R) and a left lamp unit (60L) each configured to flash in at least two different patterns, the control device (10) comprising:
a flashing control unit (140) configured to control flashing of the right lamp unit (60R) and the left lamp unit (60L); and
a behavior control unit (130) configured to execute at least a deceleration process for decelerating the vehicle (SV) in a traveling lane and a course change process for causing the vehicle (SV) to enter an adjacent lane or a road shoulder from the traveling lane when a driver of the vehicle (SV) is in a state that is inappropriate to continue driving,
wherein the flashing control unit (140) is configured to flash the right lamp unit (60R) and the left lamp unit (60L) in the same pattern when the behavior control unit (130) executes the deceleration process, and
wherein the flashing control unit (140) is configured to flash the right lamp unit (60R) and the left lamp unit (60L) in different patterns when the behavior control unit (130) executes the course change process.

2. The control device (10) for the vehicle (SV) according to claim 1, wherein:
each of the right lamp unit (60R) and the left lamp unit (60L) includes a plurality of light emitting portions (64) arranged in a vehicle width direction; and
the flashing control unit (140) is configured to, when the behavior control unit (130) executes the course change process, flash the light emitting portions (64) of the right lamp unit (60R) or the left lamp unit (60L) that is located on a side along a course change direction in a sequential pattern in which the light emitting portions (64) are sequentially turned ON in the vehicle width direction from the light emitting portion opposite to the side along the course change direction and then turned OFF.

3. The control device (10) for the vehicle (SV) according to claim 1, wherein:
the right lamp unit (60R) and the left lamp unit (60L) include light emitting portions (64) configured to flash in cycles having different lengths or to be lit in different lighting periods per cycle; and
the flashing control unit (140) is configured to, when the behavior control unit (130) executes the course change process, flash the right lamp unit (60R) and the left lamp unit (60L) by setting a longer flashing cycle or setting a longer lighting period per cycle for the light emitting portion (64) of the right lamp unit (60R) or the left lamp unit (60L) that is located on a side along a course change direction than the light emitting portion (64) of the right lamp unit (60R) or the left lamp unit (60L) that is located opposite to the side along the course change direction.

4. A vehicle lamp system comprising:
a right lamp unit (60R) and a left lamp unit (60L) each including at least one light emitting portion (64) in the same unit; and
a flashing control unit (150) configured to control flashing of the light emitting portions (64) of the right lamp unit (60R) and the left lamp unit (60L) based on an operation state of a turn signal lever (71) and/or a hazard indicator switch (75),
wherein the flashing control unit (150) is configured to flash the light emitting portions (64) of the right lamp unit (60R) and the left lamp unit (60L) in the same pattern when only the hazard indicator switch (75) is operated, and
wherein the flashing control unit (150) is configured to flash the light emitting portions (64) of the right lamp unit (60R) and the left lamp unit (60L) in different patterns when both the turn signal lever (71) and the hazard indicator switch (75) are operated.

5. The vehicle lamp system according to claim 4, wherein:
each of the right lamp unit (60R) and the left lamp unit (60L) includes a plurality of the light emitting portions (64), and the light emitting portions (64) are arranged in a vehicle width direction; and
the flashing control unit (140) is configured to, when both the turn signal lever (71) and the hazard indicator switch (75) are operated, flash the light emitting portions (64) of the right lamp unit (60R) or the left lamp unit (60L) that is located on a side along an operation direction of the turn signal lever (71) in a sequential pattern in which the light emitting portions (64) are sequentially turned ON in the vehicle width direction from the light emitting portion opposite to the side along the operation direction and then turned OFF.

6. The vehicle lamp system according to claim 4, wherein:
the light emitting portions (64) of the right lamp unit (60R) and the left lamp unit (60L) are configured to flash in cycles having different lengths or to be lit in different lighting periods per cycle; and
the flashing control unit (140) is configured to, when both the turn signal lever (71) and the hazard indicator switch (75) are operated, flash the right lamp unit (60R) and the left lamp unit (60L) by setting a longer flashing cycle or setting a longer lighting period per cycle for a plurality of the light emitting portions (64) of the right lamp unit (60R) or the left lamp unit (60L) that is located on a side along an operation direction of the turn signal lever (71) than the light emitting portions (64) of the right lamp unit (60R) or the left lamp unit (60L) that is located opposite to the side along the operation direction.

7. A non-transitory recording medium storing instructions that are executable by one or more processors of a computer of a vehicle (SV) and that cause the one or more processors to perform functions, the vehicle (SV) including a right lamp unit (60R) and a left lamp unit (60L) each configured to flash in at least two different patterns, the functions comprising:
executing a deceleration process for decelerating the vehicle (SV) in a traveling lane when a driver of the vehicle (SV) is in a state that is inappropriate to continue driving;
executing a course change process for changing a course of the vehicle (SV) to a road shoulder or an adjacent lane that is adjacent to the traveling lane;
flashing the right lamp unit (60R) and the left lamp unit (60L) in the same pattern when the deceleration process is executed; and
flashing the right lamp unit (60R) and the left lamp unit (60L) in different patterns when the course change process is executed.

8. A non-transitory recording medium storing instructions that are executable by one or more processors of a computer of a vehicle (SV) and that cause the one or more processors to perform functions, the vehicle (SV) including a right lamp unit (60R) and a left lamp unit (60L) each including at least one light emitting portion (64) in the same unit, and a turn signal lever (71) and a hazard indicator switch (75) to be operated to flash the right lamp unit (60R) or the left lamp unit (60L), the functions comprising:
flashing the light emitting portions (64) of the right lamp unit (60R) and the left lamp unit (60L) in the same pattern when only the hazard indicator switch (75) is operated; and
flashing the light emitting portions (64) of the right lamp unit (60R) and the left lamp unit (60L) in different patterns when both the turn signal lever (71) and the hazard indicator switch (75) are operated.
